# EUROPÄISCHE PATENTSCHRIFT

(11) **EP 2 360 330 B1**
(45) Veröffentlichungstag und Bekanntmachung des Hinweises auf die Patenterteilung: **06.12.2017**
(21) Anmeldenummer: 11151872.6
(22) Anmeldetag: 24.01.2011
(51) Int. Cl.: E04F 19/04

(54) **Leistenverbinder**
Base strip connector
Connecteur de plinthes

(30) Priorität: 13.02.2010 DE 202010002324 U
(43) Veröffentlichungstag der Anmeldung: 24.08.2011
(73) Patentinhaber: Döllken-Weimar GmbH, 99428 Nohra/Weimar (DE)
(72) Erfinder: Breuning, Wolfgang, 96275 Marktzeuln (DE); Laube, Walter, 92318 Neumarkt (DE); Schleiwies, Mike, 99894 Friedrichroda (DE)
(74) Vertreter: von dem Borne, Andreas

(56) Entgegenhaltungen:
- EP-A1- 0 669 492
- WO-A1-96/28681
- DE-U1- 29 814 309
- DE-U1-202004 003 976
- DE-U1-202007 002 815
- DE-U1-202007 002 816
- JP-A- 2003 120 011

## Beschreibung

Die Erfindung betrifft einen Leistenverbinder für die Verbindung von zwei Leisten, insbesondere Sockelleisten, Wandanschlussleiste oder dergleichen Abschlussleisten, wobei die Leistenkörper einen zentralen Leistenkörper aufweisen, an den oberseitig ein oberes Abschlussprofil, z. B. Wandabschlussprofil und/oder unterseitig ein unteres Abschlussprofil, z. B. Bodenabschlussprofil, angeschlossen ist, wobei der Leistenkörper als Hohlprofil mit zumindest einem einen Funktionskanal bildenden Hohlraum ausgebildet ist und ein im wesentlichen C-förmiges und frontseitig offenes Basisprofil (6) mit rückseitiger C-Basis sowie oberem und unterem C-Schenkel aufweist, dessen frontseitige Öffnung mit einem Abdeckprofil unter Bildung des Hohlprofils verschlossen oder verschließbar ist.

Eine solche Leiste wird z. B. als Sockelleiste an einem Übergang Boden/Wand oder auch als Wandanschlussleiste im Bereich einer Arbeitsplatte oder dergleichen und folglich am Übergang Platte/Wand verlegt. In dem von dem Leistenkörper gebildeten Hohlraum lassen sich Kabel, Leitungen oder dergleichen Funktionselemente verlegen, so dass die Leiste, bzw. deren Hohlprofil ausgebildeter Leistenkörper zugleich einen Funktionskanal bilden. Dazu lässt sich das Kabel bzw. die Leitung zunächst in das frontseitige offene Basisprofil einlegen, welches dann mit dem einen Deckel bildende Abdeckprofil verschlossen wird. Derartige Leisten sind üblicherweise aus Kunststoff gefertigt. Die Erfindung umfasst nicht nur Leisten für den Innenbereich sondern auch für den Außenbereich, z. B. als Sockelleisten außen am Haus.

Eine derartige Leiste ist aus der DE 20 2007 002 815 U1 bekannt. Das Abdeckprofil ist im Bereich des unteren C-Schenkels und/oder im Bereich des oberen C-Schenkels mittels einer oder mehreren Rastverbindungen an den unteren und ggf. an den oberen C-Schenkel anschließbar. Die bekannte Leiste hat sich bewährt.

Aus der JP-A-2003120011 ist eine Sockelleiste mit einem zentralen Leistenkörper bekannt, an den oberseitig ein Wandabschlussprofil und unterseitig ein Bodenabschlussprofil angeschlossen ist. Der Leistenkörper ist als Hohlprofil mit einem ein Funktionskanal bildenden Hohlraum ausgebildet und weist ein im wesentlichen C-förmiges und frontseitig offenes Basisprofil mit rückseitiger C-Basis auf, dessen frontseitige Öffnung mit einem Abdeckprofil unter Bildung des Hohlprofils verschlossen oder verschließbar ist. Das Abdeckprofil selbst kann transparent oder zumindest bereichsweise transparent ausgestaltet sein, wobei in den Funktionskanal ein oder mehrere Beleuchtungsvorrichtungen einsetzbar sind.

Der Erfindung liegt die Aufgabe zugrunde, einen Leistenverbinder zur Verbindung zweier Leisten, insbesondere Sockelleisten, Wandanschlussleisten oder dergleichen bereitzustellen.

Zur Lösung der Aufgabe lehrt die Erfindung einen Leistenverbinder und folglich ein Verbindungselement für Leisten und insbesondere Sockelleisten, Wandanschlussleisten oder dergleichen Abschlussleisten, die beispielsweise auch für beleuchtete Sockelleisten verwendet werden können. Im Rahmen der Erfindung wird ein Leistenverbinder für die Verbindung von zwei Abschlussleisten zur Verfügung gestellt. Die Abschlussleisten können dabei in der eingangs beschriebenen Weise einen zentralen Leistenkörper aufweisen, an dem oberseitig ein oberes Abschlussprofil und/oder unterseitig ein unteres Abschlussprofil angeschlossen ist, wobei der Leistenkörper als Hohlprofil mit zumindest einem Funktionskanal bildenden Hohlraum ausgebildet ist und ein im wesentlichen C-förmiges und frontseitig offenes Basisprofil mit rückseitiger C-Basis sowie oberem und unterem C-Schenkel aufweist, dessen frontseitige Öffnung mit einem Abdeckprofil unter Bildung des Hohlprofils verschlossen oder verschließbar ist. Das Abdeckprofil kann transparent oder zumindest bereichsweise transparent ausgebildet sein, wobei in den Funktionskanal eine oder mehrere Beleuchtungsvorrichtungen eingesetzt oder einsetzbar sind. Derartige Beleuchtungsvorrichtungen sind vorzugsweise als Leuchtdioden ausgebildet, wobei besonders bevorzugt eine Vielzahl von Leuchtdioden auf oder an einem gemeinsamen Träger, z. B. einem Trägerband befestigt sind oder in ein solches Trägerband integriert sind. Transparent meint im Rahmen der Erfindung, dass das Abdeckprofil transparent für sichtbares Licht ist. Davon erfasst sind jedoch auch "teiltransparente" bzw. opake Materialien in der Art eines "Milchglases". Das Abdeckprofil ist vorzugsweise aus transparentem Kunststoff gefertigt. Es können lumineszierende, zum Beispiel fluoreszierende oder phosphoreszierende Materialen verwendet werden. Die Erfindung betrifft aber auch Leistenverbinder für die Verbindung herkömmlicher Abschlussleisten ohne transparentes Abdeckprofil, wie sie beispielsweise in DE 20 2007 002 815 U1 oder DE 20 2007 002 816 U1 beschrieben sind.

Im Rahmen der Erfindung lassen sich die Anwendungsmöglichkeiten von Leisten mit einem Funktionskanal, der bislang in erster Linie als Kabelkanal verwendet wurde, erweitern, wenn das Abdeckprofil als transparentes oder zumindest bereichsweise transparentes Abdeckprofil ausgebildet ist. Denn auf diese Weise lässt sich in die Sockelleiste eine Beleuchtung integrieren, so dass insgesamt beleuchtete oder beleuchtbare Leisten und insbesondere Sockelleisten geschaffen werden. Dabei lässt sich die Beleuchtungsvorrichtung, z. B. die Leuchtdiode oder vorzugsweise eine Vielzahl von Leuchtdioden an einem geeigneten Träger zunächst in das frontseitig offene Basisprofil einlegen, welches dann mit dem transparenten Abdeckprofil verschlossen wird. Die Beleuchtung kann insbesondere aus ästhetischen Gründen bzw. aus designtechnischen Gründen vorgesehen sein, um beispielsweise optisch besonders ansprechende Leisten und insbesondere Sockelleisten zu schaffen. Der Einsatz ist dabei nicht auf den privaten Bereich beschränkt, sondern beleuchtete Sockelleisten können insbesondere auch in gewerblichen Bereichen, z. B. in öffentlichen Gebäuden wie z. B. Krankenhäusern, in Theatern oder Kinos, im Bereich des Messebaus oder auf Schiffen verwendet werden. Den beleuchteten Sockelleisten kann aber auch die Funktion einer Notbeleuchtung zukommen. Außerdem können beispielsweise Fluchtwege, Sicherheitswege, Sicherheitsbereiche oder dergleichen mit derartigen beleuchteten Sockelleisten markiert werden. Dabei werden nicht nur die Beleuchtungsvorrichtungen selbst, sondern auch die elektrischen Anschlüsse innerhalb des "Kabelkanals", der hier einen Funktionskanal bildet, verlegt. Alternativ zu Leuchtdioden können auch andere Leuchtmittel verwendet werden.

Das transparente oder zumindest bereichsweise transparente Abdeckprofil ist vorzugsweise im Bereich des oberen C-Schenkels und/oder im Bereich der Leisten des unteren C-Schenkels mittels einer Rastverbindung an diesen anschließbar. Es kann folglich ein separates Abdeckprofil vorliegen, welches gleichsam auf die Leiste aufgerastet wird. Optional bzw. ergänzend kann das transparente oder zumindest bereichsweise transparente Abdeckprofil aber auch schwenkbar an den unteren oder oberen C-Schenkel angeschlossen sein.

Bei einem solchen Leistenverbinder kann es sich um einen Außeneckverbinder für die Verkleidung von Außenecken oder auch einen Inneneckverbinder für die Verkleidung von Innenecken handeln. In diesen Fällen sind die beiden zu verbindenden Leisten in der Regel unter einen Winkel von 90° zueinander angeordnet. Es sind auch andere Winkel möglich, zum Beispiel etwa 135°. Bei dem Leistenverbinder kann es sich jedoch auch um einen "geraden" Leistenverbinder für die Verbindung von zwei fluchtenden Leisten handeln.

Erfindungsgemäß ist der Leistenverbinder gekennzeichnet durch einen im Querschnitt C-förmigen Grundkörper, an den oberseitig ein oberes Abschlussprofil und/oder unterseitig ein unteres Abschlussprofil angeschlossen ist und durch eine Abdeckkappe, mit welcher der C-förmige Grundkörper unter Bildung eines Hohlraums verschließbar ist. Dieser von dem C-förmigen Grundkörper und der Abdeckkappe gebildete Hohlraum fluchtet im montierten Zustand mit den jeweiligen Leisten, welche mit dem Leistenverbinder verbunden werden. Der C-förmige Grundkörper weist eine rückseitige C-Basis und einen oberen C-Schenkel sowie einen unteren C-Schenkel auf, wobei das obere Abschlussprofil an den oberen C-Schenkel angeformt ist und das untere Abschlussprofil an den unteren C-Schenkel angeformt ist.

Dabei geht die Erfindung von der Erkenntnis aus, dass sich Leisten insbesondere Sockelleisten mit Kabelkanal oder Funktionskanal besonders vielfältig und zuverlässig einsetzen lassen, wenn geeignete Leistenverbinder als Formkörper zur Verfügung gestellt werden, welche einerseits die Stoßstellen zwischen den Leisten bzw. verschiedenen Leistenabschnitten in ästhetisch einwandfreier Weise überbrücken und andererseits eine einwandfreie Verlegung von Kabeln oder dergleichen ermöglichen. Von besonderer Bedeutung ist im Rahmen der Erfindung, dass im Bereich der Übergänge zwischen einzelnen Leistenabschnitten nicht länger die Gefahr besteht, dass die innerhalb der Leisten verlegten Funktionselemente, z. B. Kabel, mit der Wand und/oder einem Boden, in Berührung kommen. Denn im Rahmen der Erfindung stellt auch der Leistenverbinder einen "geschlossenen" Hohlraum zur Verfügung, welcher die Funktionskanäle der beiden angrenzenden Leisten zuverlässig überbrückt. Das Kabel kann folglich weder mit dem Boden noch mit der Wand in Berührung kommen, da es auch im Bereich des Leistenverbinders unterseitig und oberseitig von den C-Schenkeln und rückseitig von der C-Basis des Grundkörpers "umschlossen" wird. Damit genügt die Gesamtanordnung aus Leistenverbinder einerseits und den angrenzenden Leisten andererseits den Anforderungen, die insbesondere an Kabelkanäle für Netzspannungen im Bereich von etwa 230 V gestellt werden.

Sofern derartige Leistenverbinder mit beleuchteten Sockelleisten kombiniert werden sollen, ist es zweckmäßig, wenn die frontseitige Abdeckkappe aus einem transparenten oder zumindest bereichsweise transparenten Material gefertigt ist. Dann besteht die Möglichkeit, eine Leistenanordnung durchgehend als beleuchtete Leistenanordnung auszugestalten, ohne dass die Beleuchtungselemente im Bereich der Verbinder und insbesondere Eckverbinder unterbrochen werden. Vorzugsweise besteht die Abdeckkappe aus einem transparenten oder zumindest bereichsweise transparenten Kunststoff.

Die erfindungsgemäßen Verbindungselemente können jedoch auch mit herkömmlichen (unbeleuchteten) Kabelkanalleisten kombiniert werden, z.B. mit Kabelkanalleisten gemäß DE 20 2007 002 816 U1 oder DE 20 2007 002 815 U1. In einem solchen Fall ist die Abdeckkappe vorzugsweise aus einem nicht transparenten Kunststoff gefertigt. Es ist dann zweckmäßig, die Abdeckkappe hinsichtlich ihres Designs an das übrige Design der Leiste anzupassen. Es sind aber auch andere Kombinationen möglich.

Nach einem weiteren Vorschlag der Erfindung, dem besondere Bedeutung zukommt, ist in den Übergangsbereichen zwischen C-Basis und oberem bzw. unterem C-Schenkel eine schlitzartige Einschuböffnung vorgesehen, in welche das Ende der zu montierenden Leiste eingreift. Die C-Schenkel sind folglich nicht über ihre gesamte Länge mit der C-Basis verbunden, sondern nur über einen bestimmten Bereich, so dass vorzugsweise beidseitig die schlitzartigen Einschuböffnungen entstehen, in welche die zu montierende Leiste eingreifen kann. Dabei greift die Leiste in der Regel mit ihrem winkelartigen Übergangsbereich zwischen rückseitiger C-Basis und dem jeweiligen C-Schenkel in diesen Einschubschlitz ein. Dieses hat nicht nur den Vorteil, dass eine zuverlässige Verbindung zwischen Leiste und Leistenverbinder geschaffen wird, sondern eine derartige Verbindung erleichtert auch die Montage des Gesamtsystems an der jeweiligen Anlagefläche, z. B. an dem Boden und/oder der Wand. Denn es besteht auf diese Weise die Möglichkeit, dass die C-Basis der zu montierenden Leiste im Montagezustand rückseitig und folglich außenseitig gegen die C-Basis des Leistenverbinders anliegt. Zugleich besteht die Möglichkeit, dass der obere C-Schenkel der zu montierenden Leiste im montierenden Zustand unterseitig und folglich innenseitig gegen den oberen C-Schenkel des Leistenverbinders anliegt und dass der untere C-Schenkel der zu montierenden Leiste im montierten Zustand oberseitig und folglich ebenfalls innenseitig gegen den korrespondierenden C-Schenkel des Leistenverbinders anliegt. Das C-förmige Basisprofil der Leiste wird folglich nicht vollständig in den C-förmigen Grundkörper des Leistenverbinders eingesteckt und der C-förmige Grundkörper des Leistenverbinders wird auch nicht vollständig in das C-förmige Basisprofil der Leiste eingesteckt, sondern im Zuge der Montage liegen einige Abschnitte der Leiste außenseitig gegen den C-förmigen Grundkörper des Verbinders an und andere Teile innenseitig. Dieses gelingt insbesondere durch die vorgesehenen Einschubschlitze, die im Zuge der Montage vollständig verschlossen werden. Dies hat insbesondere den Vorteil, dass rückseitig eine plane und fluchtende Anlagefläche der Gesamtanordnung geschaffen wird, welche gegen z. B. eine Wand montiert werden kann.

Die Abdeckkappe kann im Bereich des oberen C-Schenkels und/oder im Bereich des unteren C-Schenkels mittels einer Rastverbindung an diesen anschließbar sein. Die Erfindung umfasst dabei besonders bevorzugt solche Ausführungsformen, bei denen obere und untere Rastverbindungen vorgesehen sind und die Abdeckkappe folglich als separates Bauteil auf den Grundkörper aufgerastet wird. Optional kann die Abdeckkappe im Bereich eines C-Schenkels schwenkbar an diesen C-Schenkel angeschlossen sein. Dabei kann die Abdeckkappe einstückig gelenkig an einen C-Schenkel angeformt sein, z. B. mittels eines biegeelastischen Gelenkabschnittes, welcher als weichelastischer Gelenkabschnitt oder als wanddickenreduzierter Gelenkabschnitt ausgebildet sein kann. Die Abdeckkappe kann auch vollständig aus elastischem bzw. weichelastischem Material bestehen.

Im montierten Zustand überdeckt der Leistenverbinder die korrespondierende Leiste bzw. die korrespondierenden Leisten frontseitig um ein bestimmtes Maß, um eine einwandfreie Verbindung insbesondere unter ästhetischen Gesichtspunkten zu gewährleisten. Dazu überdecken die Abdeckkappe einerseits und das obere Abschlussprofil und/oder das untere Abschlussprofil andererseits des Verbinders die korrespondierende Leiste.

Nach einem weiteren Vorschlag der Erfindung ist vorgesehen, dass hinter dem oberen und/oder unteren Abschlussprofil ein oder mehrere Halteelemente angeordnet sind, wobei das obere Abschlussprofil und/oder das untere Abschlussprofil der zu montierenden Leiste im montierten Zustand in den zwischen oberem Abschlussprofil bzw. unterem Abschlussprofil und Halteelement gebildeten Spalt eingreifen. Die Abschlussprofile der Leiste werden im Zuge der Montage folglich zwischen einerseits den Abschlussprofilen des Leistenverbinders und andererseits den rückseitigen Halteelementen eingeklemmt. Diese Halteelemente können z. B. als Zapfen ausgebildet sein, wobei vorzugsweise im Bereich des oberen Abschlussprofils und/oder im Bereich des unteren Abschlussprofils jeweils für eine Leistenverbindung jeweils zumindest zwei übereinander angeordnete und beabstandete Zapfen vorgesehen sind. Die Zapfen können einen zylindrischen Querschnitt aufweisen oder besonders bevorzugt auch einen sich zur Zapfenspitze hin verjüngenden Querschnitt aufweisen und folglich gleichsam konisch ausgebildet sein.

Um die beschriebene Rastverbindung zwischen Abdeckkappe und C-förmigem Grundkörper zu realisieren, schlägt die Erfindung vor, dass an den oberen und/oder unteren C-Schenkel Rastaufnahmen, z. B. Raststege, und an die Abdeckkappe (rückseitig) korrespondierende Rastelemente z. B. Rastnasen angeformt sind. Rastaufnahmen einerseits und Rastelemente andererseits können dabei derart zusammenwirken, dass die Abdeckkappe gegen eine Verschiebung in Leistenlängsrichtung gesichert ist. Dieses lässt sich beispielsweise dadurch realisieren, dass an dem Rastelement ein Sicherungselement, z. B. ein Sicherungsvorsprung vorgesehen ist, welcher in eine Sicherungsaufnahme, z. B. eine Nut, in dem Raststeg eingreift. So kann z. B. ein Raststeg vorgesehen sein, der sich über eine gewisse Breite des Leistenverbinders erstreckt und in einen solchen Raststeg kann dann eine entsprechende Nut eingebracht sein, in die das Sicherungselement eingreift. Es können jedoch auch mehrere nebeneinander angeordnete Raststege oder Rastaufnahmen vorgesehen sein, wobei das Sicherungselement dann zwischen zwei benachbarte Raststege greift. Jedenfalls ist gewährleistet, dass eine Abdeckkappe in seitlicher Richtung nicht verschiebbar ist, so dass eine besonders zuverlässige Befestigung der Abdeckkappe an dem Grundkörper gewährleistet ist.

Die Leistenverbinder können in einer ersten Ausführungsform als Außeneckverbinder ausgebildet sein, welche auch als Außenecken bezeichnet werden.

Sie dienen der Verbindung von zwei Leisten, die unter einem "rückseitigen" Winkel von zum Beispiel etwa 90° zueinander angeordnet sind. Es sind auch andere Winkel möglich, zum Beispiel etwa 135°. In der zweiten Ausführungsform sind die Leistenverbinder als Inneneckverbinder ausgebildet, die auch als Innenecken bezeichnet werden. Mit diesen Innenecken werden zwei unter einem "vorderseitigen" Winkel von zum Beispiel etwa 90° zueinander angeordnete Leisten miteinander verbunden. Auch hier sind andere Winkel möglich. Schließlich können die Leistenverbinder auch als gerade Leistenverbinder für die Verbindung von zwei im Wesentlichen fluchtend angeordneten Leisten ausgebildet sein. Bei den Innenecken und Außenecken versteht es sich, dass C-förmige Grundkörper mit den Abschlussprofilen und die Abdeckkappe eine entsprechende Form aufweisen. Der C-förmige Grundkörper besteht dann vorzugsweise in der Draufsicht aus zwei unter einem Winkel von 90° zueinander angeordneten Abschnitten. Die Abschlussprofile können frontseitig bogenförmig ausgebildet sein.

Im Folgenden wird die Erfindung anhand einer lediglich ein Ausführungsbeispiel darstellenden Zeichnung näher erläutert. Es zeigen
- Fig. 1: eine Leistenanordnung mit mehreren Leistenabschnitten, welche über Leistenverbinder miteinander verbunden sind,
- Fig. 2: einen Querschnitt durch eine Leiste gemäß Fig. 1,
- Fig. 3A: einen Leistenverbinder in einer Ausführungsform als Außenecke in einer perspektivischen Seitenansicht,
- Fig. 3B: den Gegenstand nach Fig. 3A ohne Abdeckkappe,
- Fig.4: den Gegenstand nach Fig. 3B in einer anderen Ansicht mit angedeuteter Leiste,
- Fig. 5: die Abdeckkappe des Gegenstandes nach Fig. 3A,
- Fig. 6A: einen Leistenverbinder in der Ausführungsform als Innenecke in einer perspektivischen Ansicht,
- Fig. 6B: den Gegenstand nach Fig. 6A ohne Abdeckkappe,
- Fig. 7: den Gegenstand nach Fig. 6B in einer anderen Ansicht mit angedeuteter Leiste,
- Fig. 8: die Abdeckkappe des Gegenstandes nach Fig. 6A,
- Fig. 9A: einen Leistenverbinder in der Ausführungsform als "geraden" Verbinder in einer perspektivischen Seitenansicht,
- Fig. 9B: den Gegenstand nach Fig. 9A ohne Abdeckkappe.

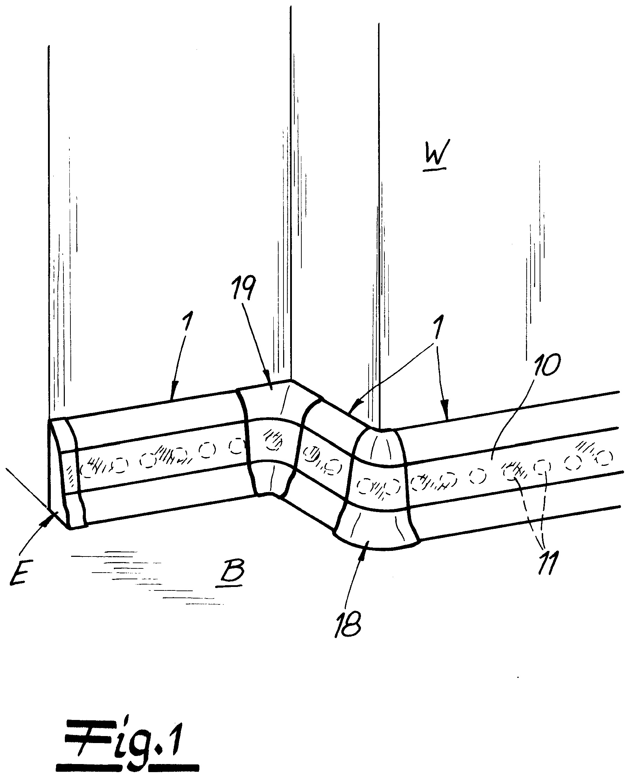

In Fig. 1 ist eine Leistenanordnung bzw. ein Leistenaggregat bestehend aus mehreren Sockelleisten 1 bzw. Sockelleistenabschnitten dargestellt, welche im Übergangsbereich zwischen einem Boden B und einer Wand W montiert sind. Die Sockelleisten 1 sind mittels Leistenverbindern 18, 19 verbunden, wobei in Fig. 1 einerseits ein Leistenverbinder 18 in der Ausführungsform als Außenecke und andererseits ein Leistenverbinder 19 in der Ausführungsform als Innenecke dargestellt ist. Außerdem ist eine Endkappe E erkennbar, welche nicht Gegenstand der Erfindung ist.

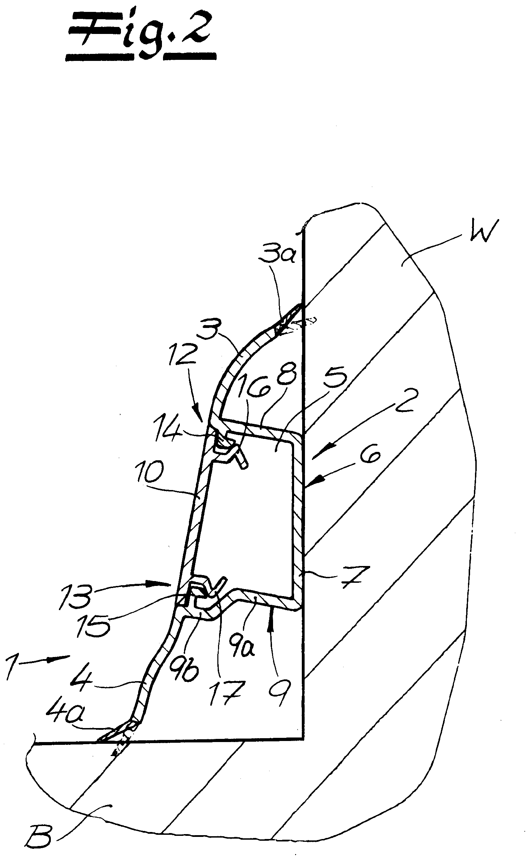

Die Sockelleiste 1 weist einen zentralen Leistenkörper 2 auf, an dem oberseitig ein oberes Abschlussprofil 3 als Wandabschlussprofil und unterseitig ein unteres Abschlussprofil 4 als Bodenabschlussprofil angeschlossen sind. Einzelheiten sind in der Querschnittsdarstellung gemäß Fig. 2 erkennbar. Der Wandabschluss wird dabei von dem oberen Wandabschlussprofil 3 bzw. einer endseitig angeformten Weichlippe 3a und der Bodenabschluss von dem unteren Abschlussprofil 4 bzw. der endseitig angeformten Weichlippe 4a gebildet. Der Leistenkörper 2 ist als Hohlprofil mit einem einen Funktionskanal 5 bildenden Hohlraum ausgebildet. Dazu ist ein im Wesentlichen C-förmiges und frontseitig offenes Basisprofil 6 mit rückseitiger C-Basis 7 sowie oberem C-Schenkel 8 und unterem C-Schenkel 9 vorgesehen, wobei die frontseitige Öffnung dieses C-förmigen Basisprofils von einem Abdeckprofil 10 unter Bildung des Hohlprofils verschlossen ist. In dem Hohlraum bzw. Innenraum dieses Hohlprofils kann beispielsweise ein Kabel bzw. eine Leitung verlegt werden. Dieses ist nicht dargestellt. Der Leistenkörper bildet folglich einen Funktionskanal, der grundsätzlich als Kabelkanal bzw. Installationskanal ausgebildet sein kann. Im Einzelnen ist der grundsätzliche Aufbau einer solchen Sockelleiste in der DE 20 2007 002 815 U1 beschrieben. Um eine einfache Montage von z. B. Kabeln zu ermöglichen, ist eine Rastverbindung 12, 13 zwischen dem Abdeckprofil 10 und dem Basisprofil 6 realisiert, d. h. der Kanal 5 wird nach Verlegen z. B. eines Kabels mit Hilfe des Abdeckprofils 10 verschlossen, welches auf das Basisprofil 8 aufgerastet wird. Dazu weisen als Rastverbindungen 12, 13 gemäß Fig. 2 sowohl der obere C-Schenkel 8 und der untere C-Schenkel 9 jeweils zumindest eine Rastaufnahme 14, 15 auf. Das Abdeckprofil 10 weist dementsprechend zwei korrespondierende Rastelemente 16, 17 auf. Im Übrigen ist in Fig. 2 erkennbar, dass bei dieser Ausführungsform der untere C-Schenkel 9 des Basisprofils 6 einerseits einen der C-Basis 7 zugeordneten und folglich rückseitigen Auflageabschnitt 9a für z. B. ein Kabel sowie andererseits ein gegenüber dem Auflageabschnitt 9a um ein vorgegebenes Maß abgesenkten und der Rastverbindung 13 zugeordneten und folglich vorderen Rastabschnitt 9b aufweist. Der untere C-Schenkel 9 ist folglich stufenförmig ausgebildet.

Wie beispielhaft in Fig. 1 angedeutet, ist das Abdeckprofil 10 transparent ausgebildet. In dem Funktionskanal 5 sind mehrere Beleuchtungsvorrichtungen 11, z. B. Leuchtdioden angeordnet. Die Sockelleiste gemäß Fig. 1 ist folglich als beleuchtete Sockelleiste ausgestaltet. In den Funktionskanal können die Beleuchtungsvorrichtungen 11 mit ihren elektrischen Anschlüssen integriert werden. Anschließend lässt sich das transparente Abdeckprofil 10 aufsetzen. Eine solche beleuchtete Sockelleiste 1 kann vielfältig eingesetzt werden, z. B. um eine Notbeleuchtung zu realisieren oder auch Fluchtwege zu markieren. Die Beleuchtung kann jedoch auch aus rein ästhetischen Gesichtspunkten vorgesehen sein.

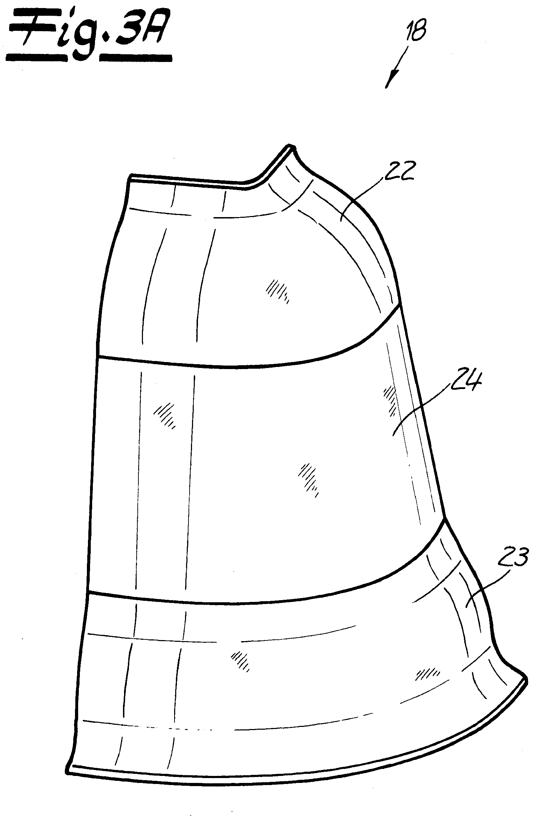

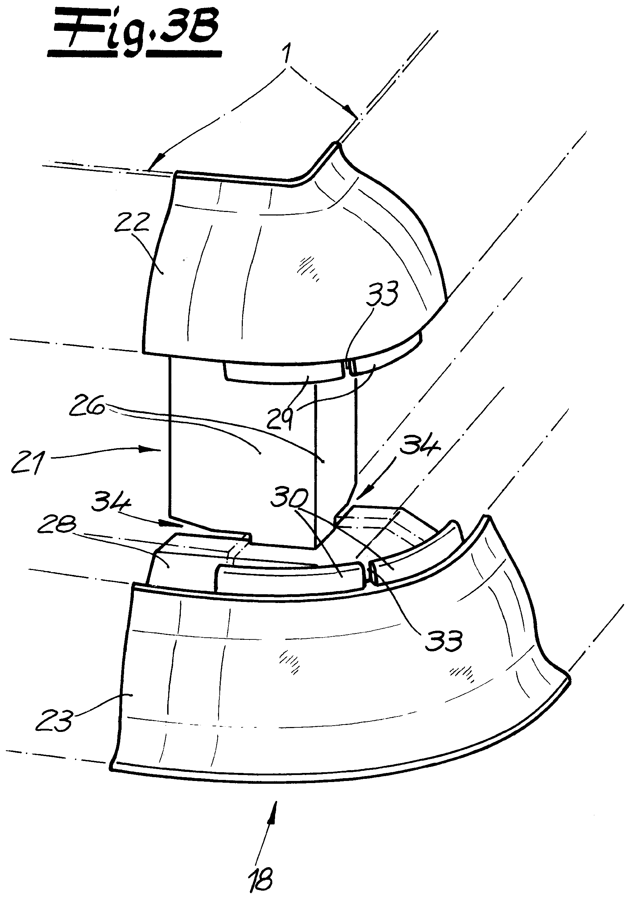

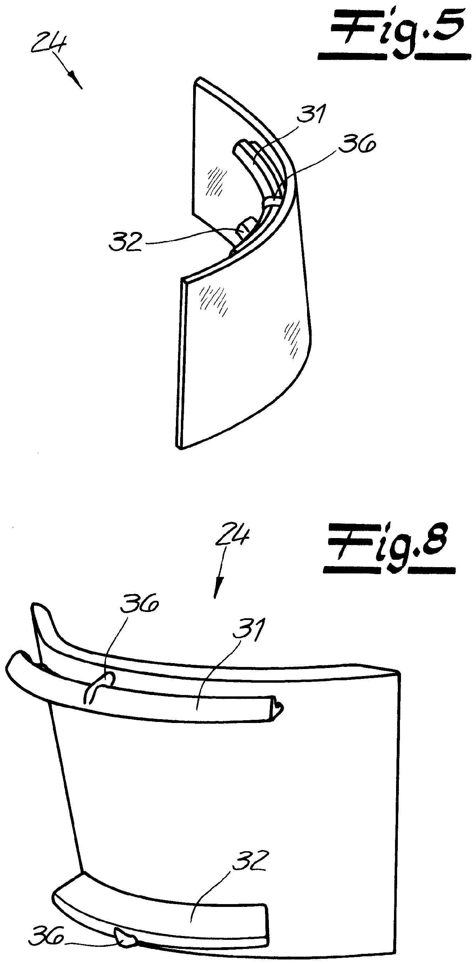

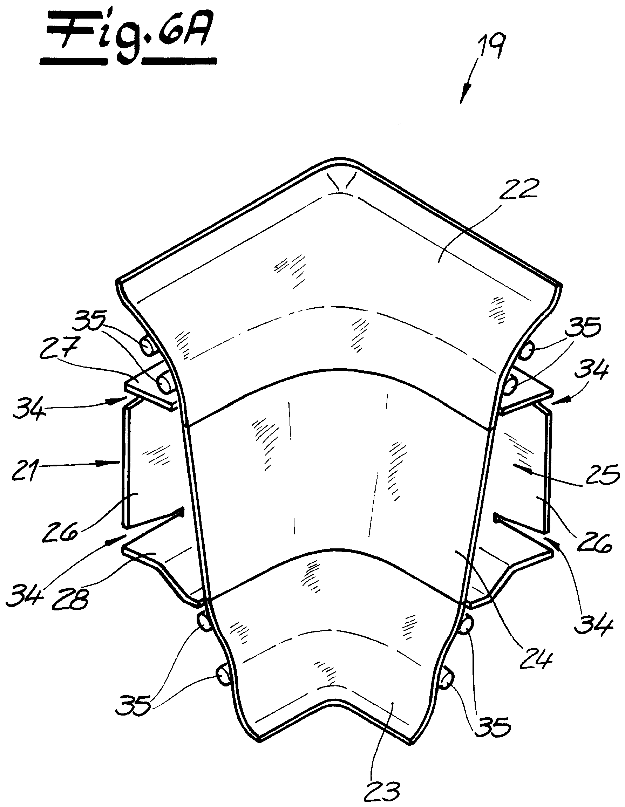

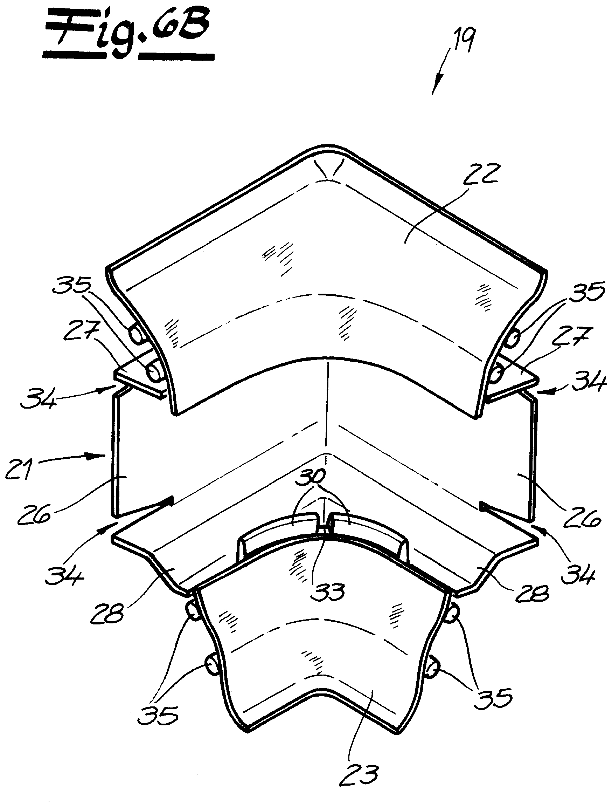

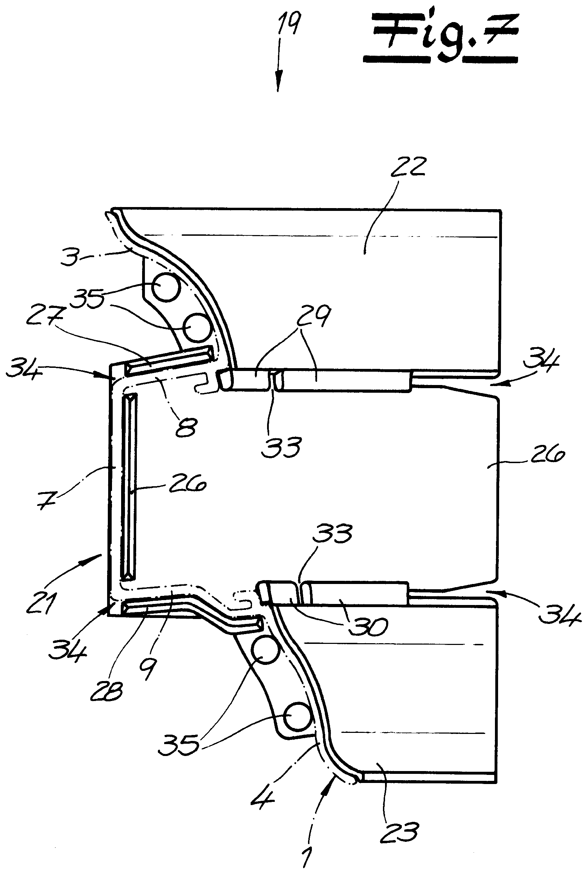

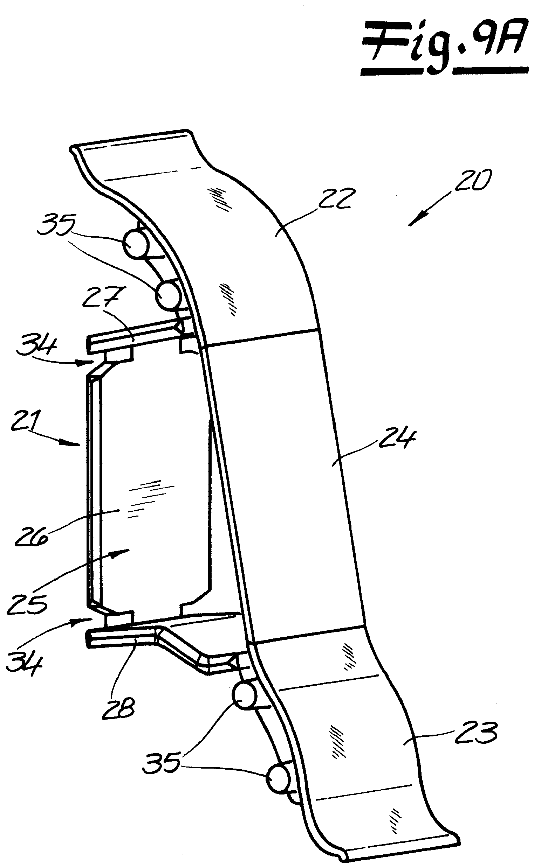

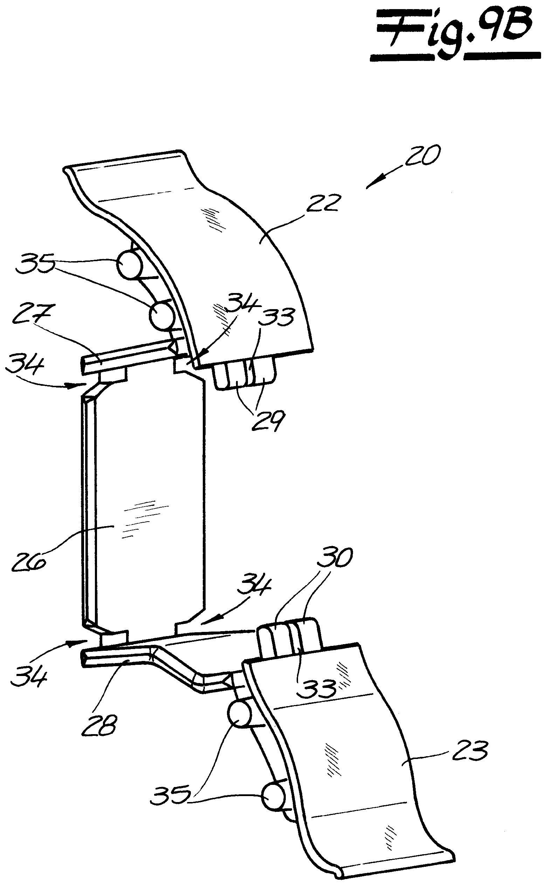

Die Erfindung soll anhand der Figuren 3 bis 11 erläutert werden, welche die in Fig. 1 bereits angedeuteten Leistenverbinder zeigen. Die erfindungsgemäßen Leistenverbinder 18, 19, 20 können beispielsweise mit einer beleuchteten Sockelleiste gemäß Fig. 1 kombiniert werden. Die Erfindung umfasst jedoch ebenso solche Ausführungsformen, bei denen die Leistenverbinder 18, 19, 20 mit Sockelleisten ohne Beleuchtung und folglich mit nicht transparentem Abdeckprofil kombiniert werden. Die Figuren 3 bis 5 zeigen einen Leistenverbinder in der Ausführungsform als Außenecke 18. Die Figuren 6 bis 8 zeigen einen Leistenverbinder in der Ausführungsform als Innenecken 19 und die Figuren 9A und 9B zeigen einen Leistenverbinder in der Ausführungsform als geraden Leistenverbinder 20.

Der Leistenverbinder 18, 19 bzw. 20 für die Verbindung von zwei Leisten weist einen im Querschnitt C-förmigen Grundkörper 21 auf, an den oberseitig ein oberes Abschlussprofil 22 und unterseitig ein unteres Abschlussprofil 23 angeformt ist. Ferner weist der Leistenverbinder 18, 19, 20 eine abnehmbare Abdeckkappe 24 auf, mit welcher der C-förmige Grundkörper unter Bildung eines Hohlraums 25 verschließbar ist. Damit besteht insbesondere die Möglichkeit, eine fertig verlegte Anordnung aus Leisten 1 und Verbindern 18, 19 bzw. 20 nachträglich zu öffnen und zwar auch im Bereich der Verbinder, so dass z. B. ein Kabel oder aber auch Beleuchtungsvorrichtungen in den Kanal integriert werden können. Derartige Funktionselemente werden folglich sicher in der Leistenanordnung aufgenommen und zwar auch im Bereich der Verbinder. Insbesondere wird ein Kontakt zwischen einem Funktionselement, z.B. einem Kabel, und der Wand bzw. dem Boden vermieden und zwar ebenfalls nicht nur im Bereich der Leiste, sondern insbesondere auch im Bereich der Verbinder.

Der C-förmige Grundkörper 21 weist eine rückseitige C-Basis 26 sowie einen oberen C-Schenkel 27 und einen anderen C-Schenkel 28 auf, wobei das obere Abschlussprofil 22 an den oberen C-Schenkel 27 angeformt ist und das untere Abschlussprofil 23 an den unteren C-Schenkel 28. Die Abdeckkappe 24 ist im Bereich der beiden C-Schenkel 27 bzw. 28 mittels Rastverbindungen 29, 30, 31, 32 an den Grundkörper 21 anschließbar. Die Abdeckkappe lässt sich folglich auf den Grundkörper 21 aufrasten und auch wieder abnehmen. Falls die Leistenverbinder 18, 19, 20 mit beleuchteten Sockelleisten kombiniert werden sollen, wie sie beispielsweise in Fig. 1 dargestellt sind, so ist es zweckmäßig, wenn die Abdeckkappe 24 aus einem transparenten Kunststoff ausgebildet ist. Dieses ist in Fig. 1 angedeutet. Im Zusammenhang mit herkömmlichen Sockelleisten, die z. B. als Kabelkanal eingesetzt werden, wird die Abdeckkappe 24 in der Regel aus einem nicht transparenten Kunststoff gefertigt. Die stufenartige Ausgestaltung des unteren C-Schenkels der Leiste 1 findet sich in entsprechender Weise bei dem unteren C-Schenkel 28 der Verbinder.

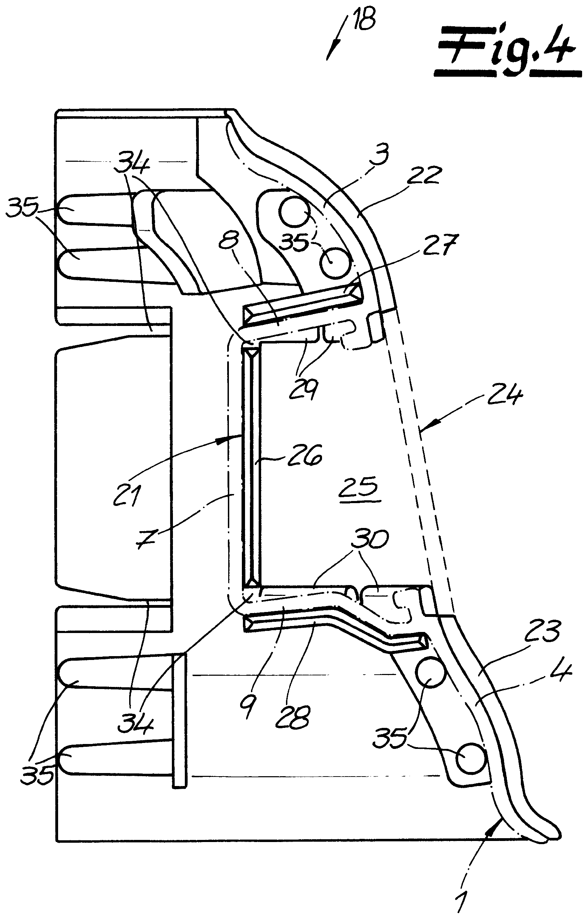

Um eine sichere Verlegung von Kabeln insbesondere auch unter Berücksichtigung elektrotechnischer Vorschriften zu gewährleisten, kommt es im Rahmen der Erfindung im besonderen Maße darauf an, dass die zu verlegenden Kabel auch im Bereich der Verbinder 18, 19, 20 vollständig gegen Wand und Boden abgeschirmt sind. Zugleich soll zur Vereinfachung der Verlegung bei der gesamten Anordnung eine bündige Anschlussfläche eingerichtet werden, welche z. B. gegen die Wand anliegt, ohne dass die Verlegung im Bereich der Verbinder gestört wird. Dazu schlägt die Erfindung vor, dass in den Übergangsbereichen zwischen C-Basis 26 und den C-Schenkeln 27 bzw. 28 jeweils eine schlitzartige Einschuböffnung 34 vorgesehen ist, in welche das jeweilige Ende der zu montierenden Leiste 1 eingreift. Diese schlitzartigen Einschuböffnungen 34 ermöglichen es nun, dass einerseits die C-Schenkel 8, 9 der Leiste 1 außenseitig gegen die korrespondierenden C-Schenkel 27, 28 des Verbinders anliegen und andererseits die rückseitige C-Basis 7 der Leiste 1 innenseitig gegen die C-Basis 26 des Verbinders anliegt. Dazu wird insbesondere auf Figur 4 verwiesen. Es wird folglich einerseits ein vollständig umschlossener Kabelkanal auch im Bereich der Verbinder eingerichtet, andererseits ist gewährleistet, dass die Verbinder und insbesondere deren rückseitige C-Basis 26 nicht rückseitig über die C-Basis 7 der Leiste 1 hinausragt, so dass die Gesamtanordnung einwandfrei an einer Wand montiert werden kann. Im Übrigen ist in den Figuren erkennbar, dass die Abdeckkappe 24 und das obere Abschlussprofil 22 und das untere Abschlussprofil 23 die korrespondierende Leiste im montierten Zustand frontseitig, ein vorgegebenes Maß überdecken.

Hinter dem oberen Abschlussprofil 22 und hinter dem unteren Abschlussprofil 23 sind eine Mehrzahl von Halteelementen 35 angeordnet, die im Ausführungsbeispiel als Zapfen ausgebildet sind. Diese dienen der Fixierung der Leiste im montierten Zustand. Denn die oberen und unteren Abschlussprofile 3 bzw. 4 der zu montierenden Leiste 1 greifen im montierten Zustand in den Spalt ein, der zwischen den Abschlussprofilen 22 bzw. 23 und den zapfenartigen Halteelementen 35 gebildet wird. Dabei ist erkennbar, dass dem oberen Abschlussprofil 22 und dem unteren Abschlussprofil 23 jeweils zwei übereinander angeordnete Zapfen 35 zugeordnet sind, und zwar jeweils auf beiden Seiten des Leistenverbinders für jeweils eine Leiste.

Um die Rastverbindung zwischen Abdeckkappe 24 und Grundkörper 21 zu realisieren, sind an den oberen und unteren C-Schenkeln 27, 28 jeweils Rastaufnahmen in der Ausführungsform als Raststege 29, 30 angeordnet. Die Abdeckkappe 24 weist korrespondierende Rastelemente in der Ausführungsform als Rastnasen 31 bzw. 32 auf. In den Figuren ist ferner erkennbar, dass die Rastverbindung gegen ein Verschieben der Abdeckkappe in Leistenlängsrichtung gesichert ist. Dazu sind in den Raststegen 29 bzw. 30 nutenartige Einformungen 33 vorgesehen, in welche ein Sicherungselement 36 der Rastnase eingreift.

## Patentansprüche

1. Leistenverbinder (18, 19, 20) für die Verbindung von zwei Leisten, wobei die Leisten einen zentralen Leistenkörper (2) aufweisen, an den oberseitig ein Wandabschlussprofil (3) und unterseitig ein Bodenabschlussprofil (4) angeschlossen ist, wobei der Leistenkörper (2) als Hohlprofil mit zumindest einem einen Funktionskanal (5) bildenden Hohlraum ausgebildet ist und ein im wesentlichen C-förmiges und frontseitig offenes Basisprofil (6) mit rückseitiger C-Basis (7) sowie oberem und unterem C-Schenkel (8, 9) aufweist, dessen frontseitige Öffnung mit einem Abdeckprofil (10) unter Bildung des Hohlprofils verschlossen oder verschließbar ist, **dadurch gekennzeichnet, dass** der Leistenverbinder
- einen im Querschnitt C-förmigen Grundkörper (21) aufweist, an den oberseitig ein oberes Abschlussprofil (22) und/oder unterseitig ein unteres Abschlussprofil (23) angeschlossen ist und
- eine Abdeckkappe (24) aufweist, mit welcher der C-förmige Grundkörper (21) unter Bildung eines Hohlraums (25) verschließbar ist,
- wobei der C-förmige Grundkörper (22) eine rückseitige C-Basis (26) und einen oberen C-Schenkel (27) sowie einen unteren C-Schenkel (28) aufweist, wobei das obere und/oder untere Abschlussprofil (22 bzw. 23) endseitig an den oberen C-Schenkel bzw. unteren C-Schenkel angeformt sind,
- und wobei die Abdeckkappe (24) im Bereich des oberen C-Schenkels (27) und/oder im Bereich des unteren C-Schenkels (28) mittels einer Rastverbindung (29, 30, 31, 32) an diesen anschließbar ist.

2. Leistenverbinder nach Anspruch 1, **dadurch gekennzeichnet, dass** die Abdeckkappe (24) im Bereich des oberen C-Schenkels (27) oder im Bereich des unteren C-Schenkels (28) schwenkbar an den oberen oder unteren C-Schenkel angeschlossen ist.

3. Leistenverbinder nach Anspruch 1 oder 2, **dadurch gekennzeichnet, dass** in dem Übergangsbereich zwischen C-Basis (26) und oberem bzw. unterem C-Schenkel (27, 28) eine schlitzartige Einschuböffnung (34) vorgesehen ist, in welche das Ende der jeweils zu montierenden Leiste (1) eingreift.

4. Leistenverbinder nach einem der Ansprüche 1 bis 3, **dadurch gekennzeichnet, dass** die C-Basis (6) der zu montierenden Leiste (1) im montierten Zustand rückseitig bzw. außenseitig gegen die C-Basis (26) des Verbinders (10) anliegt.

5. Leistenverbinder nach einem der Ansprüche 1 bis 4, **dadurch gekennzeichnet, dass** der obere C-Schenkel (8) der zu montierenden Leiste (1) im montierten Zustand unterseitig bzw. innenseitig gegen den oberen C-Schenkel (27) des Verbinders anliegt und/oder das untere C-Schenkel (9) der zu montierenden Leiste (1) im montierten Zustand oberseitig bzw. innenseitig gegen den unteren C-Schenkel (28) des Verbinders anliegt.

6. Leistenverbinder nach einem der Ansprüche 1 bis 5, **dadurch gekennzeichnet, dass** die Abdeckkappe (24) und das obere Abschlussprofil (22) und/oder das untere Abschlussprofil (23) des Verbinders die korrespondierende Leiste (1) im montierten Zustand frontseitig um ein vorgegebenes Maß überdecken.

7. Leistenverbinder nach einem der Ansprüche 1 bis 6, **dadurch gekennzeichnet, dass** hinter dem oberen und/oder unteren Abschlussprofil (22, 23) ein oder mehrere Halteelemente (35) angeordnet sind, wobei die oberen und unteren Abschlussprofile (3, 4) der zu montierenden Leiste im montierten Zustand in den zwischen den Abschlussprofilen (22, 23) und Halteelement (35) gebildeten Spalt eingreifen.

8. Leistenverbinder nach Anspruch 7, **dadurch gekennzeichnet, dass** die Halteelemente (35) als Zapfen ausgebildet sind, welche vorzugsweise einen sich zur Spitze verjüngenden Querschnitt aufweisen.

9. Leistenverbinder nach einem der Ansprüche 1 bis 8, **dadurch gekennzeichnet, dass** an den oberen und/oder unteren C-Schenkel (27, 28) Rastaufnahmen, z. B. Raststege (29, 30) und an die Abdeckkappe (24) korrespondierende Rastelemente, z. B. Rastnasen (31, 32) angeformt sind.

10. Leistenverbinder nach einem der Ansprüche 1 bis 9, **dadurch gekennzeichnet, dass** die Rastverbindung gegen Verschiebung der Abdeckkappe (24) in Leistenlängsrichtung gesichert ist, z. B. dadurch, dass ein Sicherungselement (36) der Rastelemente (31, 32) in eine Sicherungsaufnahme (33) der Raststege (29, 30) eingreift.

11. Leistenverbinder nach einem der Ansprüche 1 bis 10 in der Ausführungsform als Außeneckverbinder (18) für zwei über Eck angeordnete Leisten.

12. Leistenverbinder nach einem der Ansprüche 1 bis 11 in der Ausführungsform als Inneneckverbinder (19) für zwei über Eck angeordnete Leisten.

13. Leistenverbinder nach einem der Ansprüche 1 bis 12 in der Ausführungsform als gerade Leistenverbinder (20) für zwei fluchtend zueinander angeordnete Leisten (1).

## Claims

1. Strip connector (18, 19, 20) for connecting two strips, wherein the strips have a central strip body (2), the top side of which is adjoined by a wall closure profile (3) and the bottom side of which is adjoined by a floor closure profile (4), wherein the strip body (2) is in the form of a hollow profile which has at least one cavity that forms a functional channel (5) and a substantially C-shaped base profile (6) which is open at the front with a rear C-base (7) and an upper and a lower C-leg (8, 9), the opening in the front of which is or can be closed with a cover profile (10), thereby forming the hollow profile, **characterized in that** the strip connector
- has a base body (21) with a C-shaped cross section, of which the top side is adjoined by an upper closure profile (22) and/or the bottom side is adjoined by a lower closure profile (23), and
- has a cover cap (24) with which the C-shaped base body (21) can be closed, thereby forming a cavity (25),
- wherein the C-shaped base body (21) has a C-base (26) at the rear thereof and an upper C-shaped arm (27) as well as a lower C-shaped arm (28), wherein the upper and/or lower closure profiles (22 and/or 23) are conformed on the end of the upper C-shaped arm and the lower C-shaped arm,
- and wherein the cover cap (24) can be attached thereto in the region of the upper C-shaped arm (27) and/or in the region of the lower C-shaped arm (28) by means of a click-on connection (29, 30, 31, 32).

2. Strip connector according to Claim 1, **characterized in that** the cover cap (24) is connected pivotably to the upper or lower C-limb in the region of the upper C-shaped arm (27) and/or in the region of the lower C-shaped arm (28).

3. Strip connector according to Claim 1 or 2, **characterized in that** a slot-like insertion opening (34) is provided in the transition region between the C-base (26) and the upper and/or lower C-shaped arm (27, 28), in which the end of each strip (1) to be assembled engages.

4. Strip connector according to any one of Claims 1 to 3, **characterized in that** when the strip (1) to be assembled is in the installed condition, the rear or outer side of the C-base (6) thereof lies flush against the C-base (26) of the connector (10).

5. Strip connector according to any one of Claims 1 to 4, **characterized in that** when the strip (1) to be assembled is in the installed condition the underside and inside of the upper C-leg (8) thereof lies flush against the upper C-shaped arm (27) of the connector and/or when the strip (1) to be assembled is in the installed condition the upper side and inside of the lower C-leg (9) thereof lies flush against the lower C-shaped arm (28).

6. Strip connector according to any one of Claims 1 to 5, **characterized in that** the cover cap (24) and the closure profile (22) and/or the lower closure profile (23) of the connector cover the front of the corresponding strip (1) when assembled by a predetermined amount.

7. Strip connector according to any one of Claims 1 to 6, **characterized in that** one or more retaining elements (35) are arranged behind the upper and/or lower closure profile (22, 23), wherein when the strip to be assembled is in the installed condition the upper and lower closure profiles (3, 4) thereof engage in the gap formed between the closure profiles (22, 23) and the retaining element (35).

8. Strip connector according to Claim 7, **characterized in that** the retaining elements (35) are in the form of pins, which preferably have a cross-section which tapers toward the tip.

9. Strip connector according to any one of Claims 1 to 8, **characterized in that** engagement mountings, for example engagement sleeves (29, 30) are conformed on the upper and/or lower C-shaped arms (27, 28), and corresponding latching elements, for example locking lugs (31, 32) are conformed on the cover cap (24).

10. Strip connector according to any one of Claims 1 to 9, **characterized in that** the click-on connection is secured against displacement of the cover cap (24) in the longitudinal direction of the strip for example **in that** a securing element (36) of the locking elements (31, 32) engages in a safety seating (33) of the engagement sleeves (29, 30).

11. Strip connector according to any one of Claims 1 to 10 in the embodiment as an outer corner connector (18) for two strips connected diagonally.

12. Strip connector according to any one of Claims 1 to 11 in the embodiment as an inner corner connector (19) for two strips connected diagonally.

13. Strip connector according to any one of Claims 1 to 12 in the embodiment as a straight strip connector (20) for two strips (1) arranged to abut at the end faces thereof.

## Revendications

1. Connecteur de plinthe (18, 19, 20) pour la connexion de deux plinthes, dans lequel les plinthes présentent un corps de plinthe central (2) auquel est raccordé un profilé de finition de mur (3) du côté supérieur et un profilé de finition de sol (4) du côté inférieur, dans lequel le corps de plinthe (2) est conçu comme un profilé creux avec au moins un espace creux formant un canal fonctionnel (5) et présente un profilé de base (6) ouvert à l'avant et essentiellement en forme de C, avec une base en C (7) à l'arrière et des branches supérieure et inférieure en C (8, 9), dont l'ouverture à l'avant est fermée ou peut être fermée à l'aide d'un profilé de recouvrement (10) en formant le profilé creux, **caractérisé en ce que** le connecteur de plinthe
- présente un corps de base (21) avec une section transversale en forme de C, auquel est raccordé un profilé de finition supérieur (22) du côté supérieur et/ou un profilé de finition inférieur (23) du côté inférieur, et
- une coiffe (24) permettant de fermer le corps de base en forme de C (21) en formant un espace creux (25),
- dans lequel le corps de base en forme de C (21) présente une base arrière en C (26) et une branche supérieure en C (27) ainsi qu'une branche inférieure en C (28), dans lequel les profilés de finition supérieur et/ou inférieur (22 ou 23) sont moulés côté extrémité sur la branche supérieure en C ou la branche inférieure en C,
- et dans lequel la coiffe (24) peut être raccordée dans la région de la branche supérieure en C (27) et/ou dans la région de la branche inférieure en C (28) à celle-ci au moyen d'un assemblage à encliquetage (29, 30, 31, 32).

2. Connecteur de plinthe selon la revendication 1, **caractérisé en ce que** la coiffe (24) est raccordée de façon pivotante à la branche supérieure ou inférieure en C, dans la région de la branche supérieure en C (27) ou dans la région de la branche inférieure en C (28).

3. Connecteur de plinthe selon la revendication 1 ou 2, **caractérisé en ce que** dans la région de transition entre la base en C (26) et la branche supérieure ou inférieure en C (27, 28), il est prévu une ouverture d'insertion du genre fente (34), dans laquelle s'introduit l'extrémité de la plinthe (1) à monter respectivement.

4. Connecteur de plinthe selon l'une des revendications 1 à 3, **caractérisé en ce que** la base en C (6) de la plinthe (1) à monter s'applique du côté arrière ou du côté extérieur contre la base en C (26) du connecteur (10) à l'état monté.

5. Connecteur de plinthe selon l'une des revendications 1 à 4, **caractérisé en ce que** la branche supérieure en C (8) de la plinthe (1) à monter s'applique du côté inférieur ou du côté intérieur contre la branche supérieure en C (27) du connecteur à l'état monté, et/ou **en ce que** la branche inférieure en C (9) de la plinthe (1) à monter s'applique du côté supérieur ou du côté intérieur contre la branche inférieure en C (28) du connecteur à l'état monté.

6. Connecteur de plinthe selon l'une des revendications 1 à 5, **caractérisé en ce que** la coiffe (24) et le profilé de finition supérieur (22) et/ou le profilé de finition inférieur (23) du connecteur recouvre la plinthe (1) correspondante sur une distance prédéfinie à l'avant dans l'état monté.

7. Connecteur de plinthe selon l'une des revendications 1 à 6, **caractérisé en ce qu'**un ou plusieurs éléments de retenue (35) sont disposés derrière le profilé de finition supérieur et/ou le profilé de finition inférieur (22, 23), les profilés de finition supérieur et inférieur (3, 4) de la plinthe à monter s'introduisant dans la fente formée entre les profilés de finition (22, 23) et l'élément de retenue (35) à l'état monté.

8. Connecteur de plinthe selon la revendication 7, **caractérisé en ce que** les éléments de retenue (35) sont conçus comme des tourillons présentant de préférence une section transversale effilée vers la pointe.

9. Connecteur de plinthe selon l'une des revendications 1 à 8, **caractérisé en ce que** des logements d'encliquetage, par exemple des âmes d'encliquetage (29, 30), sont moulés sur la branche supérieure et/ou inférieure en C (27, 28), et des éléments d'encliquetage correspondants, par exemple des ergots d'encliquetage (31, 32), sont moulés sur la coiffe (24).

10. Connecteur de plinthe selon l'une des revendications 1 à 9, **caractérisé en ce que** l'assemblage à encliquetage est protégé contre un déplacement de la coiffe (24) dans la direction longitudinale de la plinthe, par exemple en introduisant un élément de blocage (36) des éléments d'encliquetage (31, 32) dans un logement de blocage (33) des âmes d'encliquetage (29, 30).

11. Connecteur de plinthe selon l'une des revendications 1 à 10, dans la forme de réalisation en tant que connecteur d'angle extérieur (18) pour deux plinthes disposées en coin.

12. Connecteur de plinthe selon l'une des revendications 1 à 11, dans la forme de réalisation en tant que connecteur d'angle intérieur (19) pour deux plinthes disposées en coin.

13. Connecteur de plinthe selon l'une des revendications 1 à 12, dans la forme de réalisation en tant que connecteur de plinthe rectiligne (20) pour deux plinthes (1) disposées de façon alignée l'une par rapport à l'autre.
